# EUROPEAN PATENT APPLICATION

(11) **EP 2 919 495 A1**
(43) Date of publication of application: **16.09.2015**
(21) Application number: 13796916.8
(22) Date of filing: 29.07.2013
(51) Int. Cl.: H04W 4/24

(54) **TERMINAL DEVICE AND CHARGE PROMPT METHOD THEREFOR**

(30) Priority: 12.11.2012 CN 201210450509
(71) Applicant: ZTE Corporation, Shenzhen, Guangdong 518057 (CN)
(72) Inventor: WANG, Yi, Shenzhen Guangdong 518057 (CN); FANG, Lijun, Shenzhen Guangdong 518057 (CN)
(74) Representative: Tischner, Oliver
(86) International application number: PCT/CN2013/080311
(87) International publication number: WO 2013/178175

(57) **Abstract**

Provided is a charge prompting method for a terminal device, which includes that after a terminal device is registered with a network, the terminal device transmits network registration information to an SIM card through an instruction, charging information which is corresponding to the network registration information, found in a network charging list and transmitted by the SIM card is received, and the charging information is displayed on an interface of the terminal device. Further provided is a terminal device. The technical solution makes it possible to enable roaming subscribers to learn detailed roaming charge conditions without an increase in network burdens of an operator and expenses.

## Description

### TECHNICAL FIELD

The disclosure relates to the technical field of communications, and in particular to a terminal device and a charge prompting method thereof.

### BACKGROUND

A Subscriber Identity Module (SIM) card is a smart Integrated Circuit (IC) card encapsulated in plastics and having a microprocessor, and it is an indispensable part of a Global System for Mobile communication (GSM) system, by virtue of which a subscriber enters a GSM network for registration. The function of an SIM Tool Kit (STK) includes a set of instructions for interaction between a terminal and an SIM card, in this way, the SIM card can be used to run applications inside the SIM card so as to implement value-added services. The set of instructions refer to two types of STK functional instructions, with one including envelope instructions issued by a terminal to an SIM card and the other including proactive instructions proactively initiated by the SIM card to the terminal. STK functional interaction between an SIM card and a terminal is made exactly by these two types of instructions between the SIM card and the terminal, and STK services make it possible to prompt a subscriber of associated charges through terminal registration information.

For important transnational operators and mainstream operators, global roaming is a necessary function, however since associated roaming protocols of an operator are different from those of other operators in different regions, different roaming charges are resulted in different roaming countries. Furthermore, roaming charges within a country is often not transparent to subscribers, that is to say, roaming subscribers do not know associated roaming charges, instead subscribers are notified of the roaming charges by means of text messaging and the like, which have the following drawbacks: (1) an increase is caused in expenses of the operator, since text messages are desired to be sent to roaming subscribers every time their locations change; (2) subscribers may not receive text messages due to connection issues of the network or they may not notice the text messages; (3) subscribers cannot proactively inquire about current charging conditions; and (4) proactive inquiry about associated charging information by roaming subscribers results in certain expenses.

### SUMMARY

In view of the above, embodiments of the disclosure are intended to provide a terminal device and a charge prompting method thereof, which enables roaming subscribers to learn detailed roaming charge conditions without an increase in network burdens of an operator and expenses.

To this end, the technical solutions of embodiments of the disclosure are implemented as follows.

A charge prompting method for a terminal device, which includes:
after a terminal device is registered with a network, the terminal device transmits network registration information to a Subscriber Identity Module (SIM) card through an instruction;
charging information corresponding to the network registration information, found in a network charging list and transmitted by the SIM card is received; and
the charging information is displayed on an interface of the terminal device.

In an embodiment, the network registration information may include at least one of following information: Mobile Country Code (MCC), Mobile Network Code (MNC) and cell Identity (ID).

In an embodiment, the network charging list may include default charging information.

In an embodiment, the method may further include that when it is determined that the SIM card fails to find the charging information corresponding to the network registration information in the network charging list, the default charging information is displayed on the interface of the terminal device.

In an embodiment, the step that the terminal device transmits network registration information to an SIM card through an instruction may include that at least one of following information: MCC, MNC and cell ID is transmitted through an envelope instruction to the SIM card.

Furthermore, an embodiment of the disclosure further provides a terminal device, which includes a transmission module, a reception module and a displaying module;
specifically, the transmission module is configured to, after the terminal device is registered with a network, transmit network registration information to a Subscriber Identity Module (SIM) card through an instruction;
the reception module is configured to receive charging information, corresponding to the network registration information, found in a network charging list and transmitted by the SIM card; and
the displaying module is configured to display the charging information on an interface of the terminal device.

In an embodiment, the terminal device may further include an updating module configured to update the charging information from an operator.

In an embodiment, the network registration information may include at least one of following information: Mobile Country Code (MCC), Mobile Network Code (MNC) and cell Identity (ID).

In an embodiment, the charging information may include default charging information.

In an embodiment, the terminal device may further include a determination module;
specifically the determination module is configured to, when determining that the SIM card fails to find the charging information corresponding to the network registration information in the network charging list, transmit the default charging information to the displaying module; and
the displaying module is further configured to display the default charging information on the interface of the terminal device.

To sum up, the disclosure has the following beneficial effects:
compared with the prior art, the method and terminal device according to embodiments of the disclosure enable roaming subscribers to learn detailed roaming charge conditions without an increase in network burdens of an operator and any expenses, thereby facilitating greatly subscribers in learning real-time charges.

### BRIEF DESCRIPTION OF THE DRAWINGS

Fig. 1 is a charging list of an SIM card according to MCC/MNC/cell ID according to an embodiment of the disclosure;
Fig. 2 is a first schematic flowchart of a charge prompting method for a terminal device according to an embodiment of the disclosure;
Fig. 3 is a second schematic flowchart of a charge prompting method for a terminal device according to an embodiment of the disclosure; and
Fig. 4 is a schematic structural diagram of a terminal device according to an embodiment of the disclosure.

### DETAILED DESCRIPTION

In view of the above problem caused when an operator notifies roaming subscribers of charges during roaming, embodiments of the disclosure adopt a charge prompting method using network registration information and STK functionality, which enables roaming subscribers to learn detailed roaming charge conditions without an increase in network burdens of an operator and expenses.

The principle of charge prompting using terminal registration information and STK functionality lie in that each time after a subscriber succeeds in network registration, at least one piece of network registration information including Mobile Country Code (MCC)/Mobile Network Code (MNC)/cell Identity (ID) is notified to an SIM card through an envelope instruction, the SIM card inquires about charging information corresponding to the network registration information and notifies a terminal of the found charging information, and the terminal displays, through a text file, associated information to the subscriber so that the subscriber knows charging information of the current registered network.

The embodiment of the disclosure includes the following contents.

The principle for the SIM card to perform terminal charge control lies in that a file is extended in the SIM card, which is used to describe roaming billing rules of operators with respect to networks with which a terminal having different MCCs/MNCs/cell IDs is registered.

Roaming charge criteria in the extended file in the SIM card can be updated using Over the Air Technology text messaging, and the terminal is notified through a refresh instruction to update relevant files.

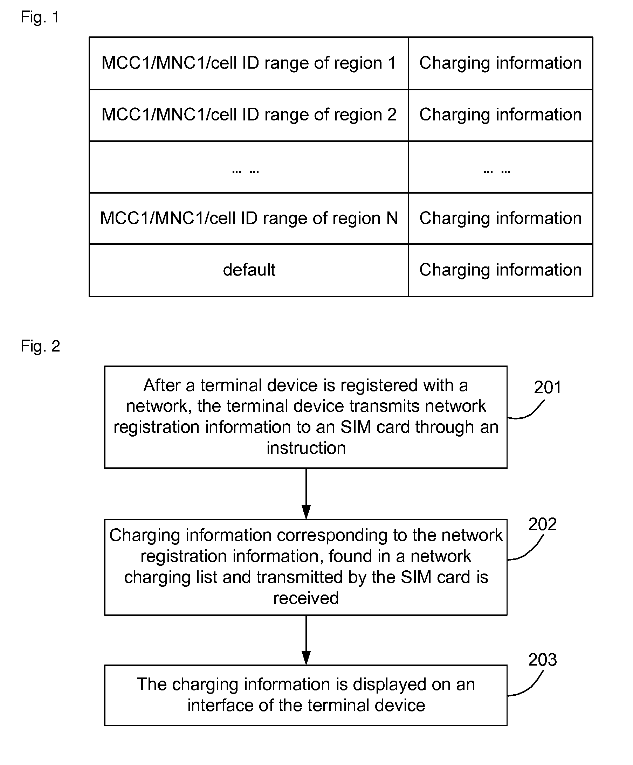

After the terminal is registered with a network, the terminal transmits, through an envelope instruction, the MCC/MNC/cell ID to the SIM card, the SIM card inquires about charging information corresponding to the network registration information through querying a table of Fig. 1 and notifies, through a proactive instruction, the terminal of the charging information; the charging information is displayed by the terminal to the subscriber through a graphical/textual interface.

Embodiments of the disclosure will be elaborated below with reference to the accompanying drawings.

Referring to Fig. 1, it is a charging list of an SIM card according to MCC/MNC/cell ID according to an embodiment of the disclosure, with charging information corresponding to ranges from MCC/MNC/cell ID of region 1 to MCC/MNC/cell ID of region N, and the last row being a default region and its corresponding charging information.

The embodiment discloses a charge prompting method for a terminal device, as shown in Fig. 2, the method includes the following steps.

Step 201 includes that after a terminal is registered with a network, the terminal device transmits network registration information to an SIM card through an instruction.

Preferably, the network registration information may include at least one of following information: MMC, MNC and cell ID.

Correspondingly, the step that the terminal device transmits network registration information to an SIM card through an instruction may include:
at least one of following information: MCC, MNC and cell ID, is transmitted through an envelope instruction to the SIM card.

Step 202 includes that charging information corresponding to the network registration information, found in a network charging list and transmitted by the SIM card is received.

Preferably, the network charging list may include default charging information.

Step 203 includes that the charging information is displayed on an interface of the terminal device.

Preferably, the method may further include: when it is determined that the SIM card fails to find the charging information corresponding to the network registration information in the network charging list, the default charging information is displayed on the interface of the terminal device.

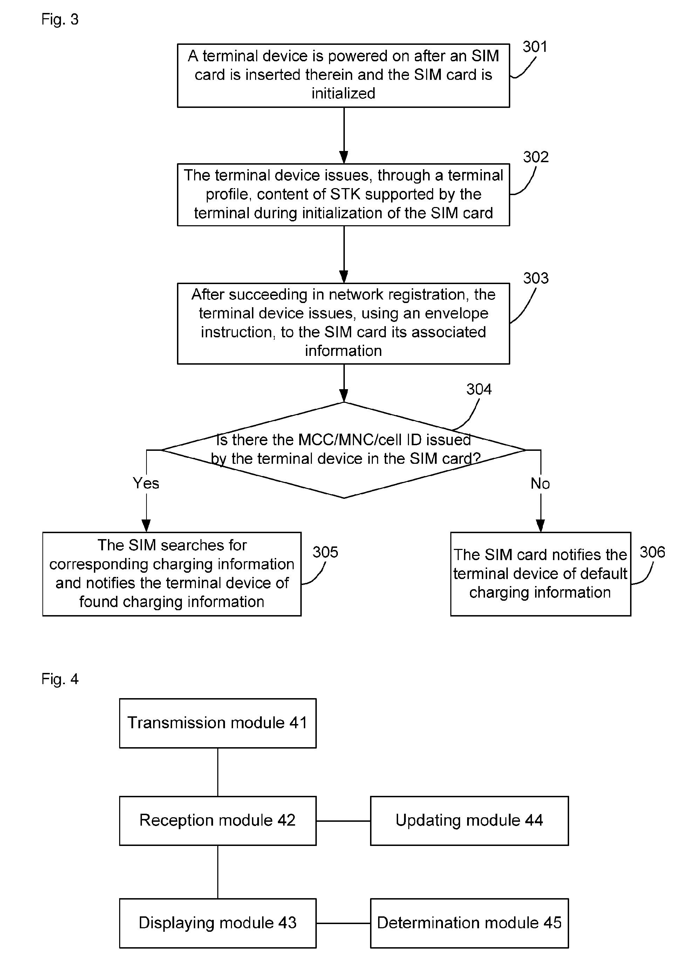

Fig. 3 is a schematic flowchart of a charge prompting method according to an embodiment of the disclosure. With reference to Fig. 3, after an SIM card according to the embodiment is inserted into a terminal device, the interaction between the terminal device and the SIM card will be described.

As shown in Fig. 3, a charge prompting method according to an embodiment of the disclosure includes the following steps:
Step 301, a terminal device is powered on after an SIM card is inserted therein and the SIM card is initialized;
Step 302, the terminal device issues, through a terminal profile, content of STK supported by the terminal during initialization of the SIM card;
Step 303, after succeeding (OK) in network registration, the terminal device issues, using an envelope instruction, to the SIM card its associated information including MCC/MNC/cell I D;
Step 304, the SIM card determines whether there is the MCC/MNC/cell ID issued by the terminal device in MCCs/MNCs/cell IDs stored therein; if there is, step 305 is executed, otherwise, step 306 is executed;
Step 305, the SIM searches for corresponding charging information and notifies the terminal device of found charging information;
when determining that there is the MCC/MNC/cell ID issued by the terminal device in MCCs/MNCs/cell IDs stored in the SIM card, the SIM card searches for charging information corresponding to the MCC/MNC/cell ID and notifies the terminal device of found charging information through a proactive instruction, and the terminal device feeds the found charging information back to a subscriber through a graphical/textual interface and issues a terminal response instruction to the SIM card; and
Step 306, the SIM card notifies the terminal device of default charging information.
when determining that there is no MCC/MNC/cell ID issued by the terminal device in MCCs/MNCs/cell IDs stored in the SIM card, the SIM card notifies the terminal device of the default charging information through a proactive instruction, and the terminal device feeds the default charging information back to a subscriber through a graphical/textual interface and issues a terminal response instruction to the SIM card.

Fig. 4 is a schematic structural diagram of a terminal device according to an embodiment of the disclosure, and the terminal device according to an embodiment of the disclosure includes a transmission module 41, a reception module 42 and a displaying module 43.

Specifically, the transmission module 41 is configured to, after the terminal device is registered with a network, transmit network registration information to an SIM card through an instruction;
the reception module 42 is configured to receive charging information corresponding to the network registration information, found in a network charging list and transmitted by the SIM card; and
the displaying module 43 is configured to display the charging information on an interface of the terminal device.

Preferably, the terminal device may further include an updating module 44 configured to update the charging information from an operator.

Preferably, the network registration information may include at least one of following information: Mobile Country Code (MCC), Mobile Network Code (MNC) and cell Identity (ID).

Preferably, the charging information may include default charging information.

Preferably, the terminal device may further include a determination module 45;
the determination module 45 is configured to, when determining that the SIM card queries no charging information corresponding to the network registration information in the network charging list, transmit the default charging information to the displaying module; and
the displaying module 43 is further configured to display the default charging information on the interface of the terminal device.

Numerous modifications and variations can be made by those skilled in the art without departing from the spirits and essences of the disclosure. All modifications, replacements and improvements made within the spirit and principles of the disclosure should be included within the scope of protection of the disclosure.

## Claims

1. A charge prompting method for a terminal device, comprising:
transmitting, by a terminal device, network registration information to a Subscriber Identity Module (SIM) card through an instruction, after the terminal device is registered with a network;
receiving charging information corresponding to the network registration information and found in a network charging list and transmitted by the SIM card; and
displaying the charging information on an interface of the terminal device.

2. The method according to claim 1, wherein the network registration information comprises at least one of following information: Mobile Country Code (MCC), Mobile Network Code (MNC) and cell Identity (ID).

3. The method according to claim 1, wherein the network charging list comprises default charging information.

4. The method according to claim 3, further comprising: when it is determined that the SIM card fails to find the charging information corresponding to the network registration information in the network charging list, displaying the default charging information on the interface of the terminal device.

5. The method according to claim 1, wherein the transmitting, by a terminal device, network registration information to an SIM card through an instruction comprises:
transmitting, through an envelope instruction, to the SIM card at least one of following information: MCC, MNC and cell ID.

6. A terminal device, comprising a transmission module, a reception module and a displaying module,
wherein the transmission module is configured to, after the terminal device is registered with a network, transmit network registration information to a Subscriber Identity Module (SIM) card through an instruction;
the reception module is configured to receive charging information corresponding to the network registration information, found in a network charging list and transmitted by the SIM card; and
the displaying module is configured to display the charging information on an interface of the terminal device.

7. The terminal device according to claim 6, further comprising an updating module configured to update the charging information from an operator.

8. The terminal device according to claim 6, wherein the network registration information comprises at least one of following information: Mobile Country Code (MCC), Mobile Network Code (MNC) and cell Identity (ID).

9. The terminal device according to claim 6, wherein the charging information comprises default charging information.

10. The terminal device according to claim 9, further comprising a determination module,
wherein the determination module is configured to, when determining that the SIM card fails to find the charging information corresponding to the network registration information in the network charging list, transmit the default charging information to the displaying module; and
the displaying module is further configured to display the default charging information on the interface of the terminal device.
